# EUROPEAN PATENT APPLICATION

(11) **EP 4 542 923 A1**
(43) Date of publication of application: **23.04.2025**
(21) Application number: 22946792.3
(22) Date of filing: 14.06.2022
(51) Int. Cl.: H04L 9/16, H04L 9/12

(54) **COMMUNICATION SYSTEM, COMMUNICATION DEVICE, METHOD, AND PROGRAM**

(71) Applicant: NIPPON TELEGRAPH AND TELEPHONE CORPORATION, Chiyoda-ku, Tokyo 100-8116 (JP)
(72) Inventor: CHIKARA, Sakae, Musashino-shi, Tokyo 180-8585 (JP); SAITO, Tsunekazu, Musashino-shi, Tokyo 180-8585 (JP); KOBAYASHI, Tetsutaro, Musashino-shi, Tokyo 180-8585 (JP); KIYOMURA, Yutaro, Musashino-shi, Tokyo 180-8585 (JP); CHIDA, Koji, Musashino-shi, Tokyo 180-8585 (JP); NATSUKAWA, Katsuyuki, Musashino-shi, Tokyo 180-8585 (JP); TAKASUGI, Koichi, Musashino-shi, Tokyo 180-8585 (JP); SHIRAI, Daisuke, Musashino-shi, Tokyo 180-8585 (JP)
(74) Representative: Murgitroyd & Company
(86) International application number: PCT/JP2022/023867
(87) International publication number: WO 2023/242972

(57) **Abstract**

A communication system according to one aspect of the present disclosure is a communication system that includes a plurality of communication apparatuses, wherein each of the communication apparatuses includes an application program configured to perform encrypted communication with another communication apparatus; and a switching unit configured to switch a key sharing scheme for generating a shared key to be used for the encrypted communication, and the switching unit is configured to switch to another key sharing scheme when the shared key cannot be generated by the key sharing scheme being used at present.

## Description

### Technical Field

The present disclosure relates to a communication system, a communication apparatus, a method, and a program.

### Background Art

A key sharing protocol called quantum key distribution (QKD) is known (see, for example, NPL 1 and NPL 2). The QKD is a technique in which a key for concealing communication between two parties is shared through quantum teleportation, and the key (hereinafter referred to as "shared key") is used to transmit and receive encrypted data.

In the QKD, an entity (KME: Key Management Entity) for performing the key sharing and an entity (SAE: Secure Application Entity) for transmitting and receiving data are situated on different devices, and the key is shared between the KEMs by using an optical communication network established by an optical fiber cable or the like.

### Citation List

### Non Patent Literature

NPL 1: ETSI GS QKD 004 V2.1.1 (2020-08) Quantum Key Distribution (QKD); Application Interface
NPL **2:** ETSI GS QKD 014 V1.1.1 (2019-02) Quantum Key Distribution (QKD); Protocol and data format of REST-based key delivery API

### Summary of Invention

### Technical Problem

However, the QKD has a problem that the key cannot be shared if tapping to the optical fiber cable continues. Therefore, from the viewpoint of service continuity, it is necessary to switch to another key sharing scheme even if a certain key sharing scheme cannot be used for some reason.

The present disclosure has been made in view of the above-mentioned point, and provides a technique capable of switching a plurality of key sharing schemes.

### Solution to Problem

A communication system according to one aspect of the present disclosure is a communication system that includes a plurality of communication apparatuses, wherein
each of the communication apparatuses includes:
an application program configured to perform encrypted communication with another communication apparatus; and
a switching unit configured to switch a key sharing scheme for generating a shared key to be used for the encrypted communication, and
the switching unit is configured to switch to another key sharing scheme when the shared key cannot be generated by the key sharing scheme being used at present.

### Advantageous Effects of Invention

A technique capable of switching a plurality of key sharing schemes is provided.

### Brief Description of Drawings

[Fig. 1] Fig. 1 is a diagram showing one example of an overall configuration of a communication system according to a present embodiment.
[Fig. 2] Fig. 2 is a diagram showing one example of a detailed functional configuration of a protocol conversion unit according to the present embodiment.
[Fig. 3]

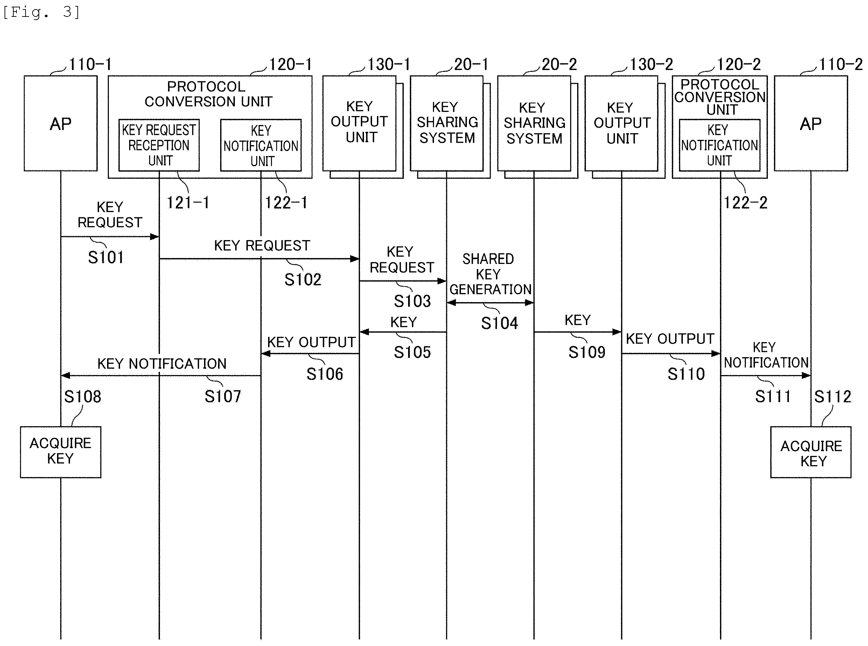

   Fig. 3 is a sequence diagram showing one example of key acquisition processing according to the present embodiment.
[Fig. 4]

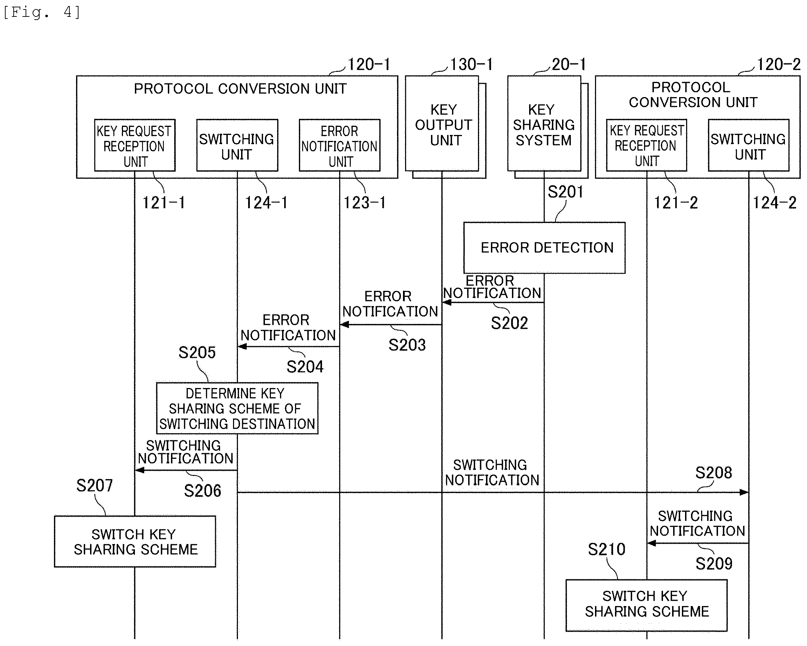

   Fig. 4 is a sequence diagram showing one example of switching processing according to the present embodiment.
[Fig. 5]

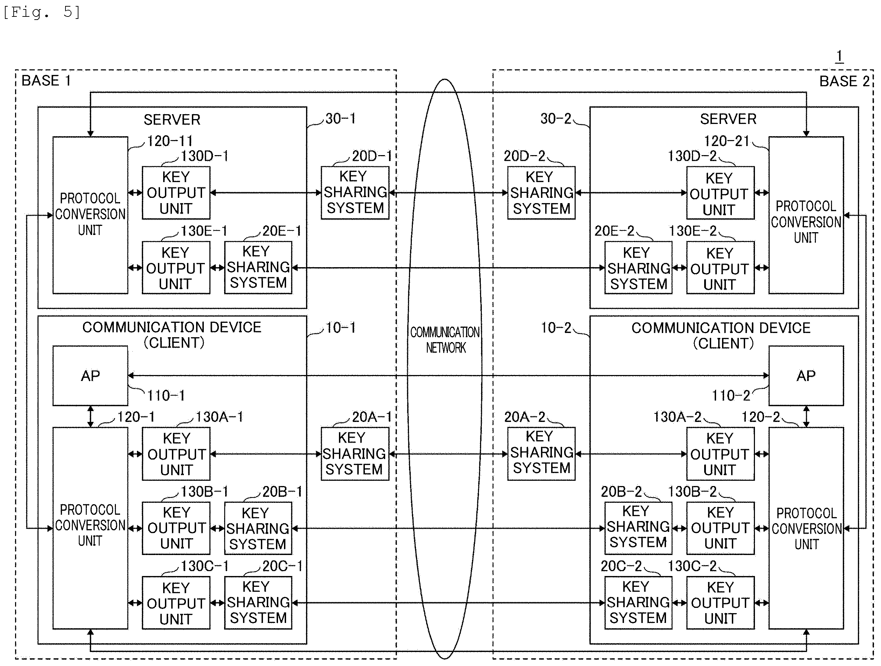

   Fig. 5 is a diagram showing a modification example of an overall configuration of the communication system according to the present embodiment.
[Fig. 6]

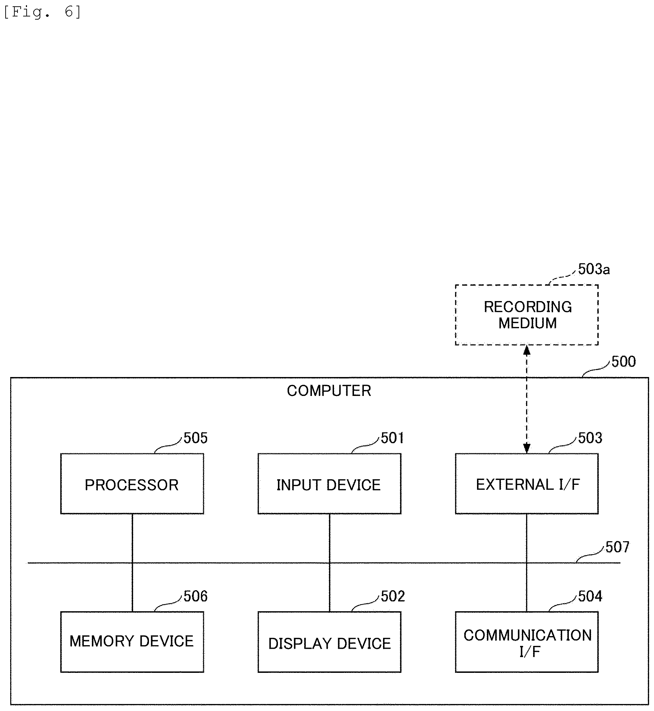

   Fig. 6 is a diagram showing one example of a computer hardware configuration.

### Description of Embodiments

Hereinafter, one embodiment of the present invention will be described. A communication system 1 capable of switching a plurality of key sharing schemes including QKD will be described below. According to the communication system 1, even if a certain key sharing scheme cannot be used due to some reason (for example, an error or the like), it is possible to be switched to another key sharing scheme, so that continuity of a service requiring encrypted communication can be secured (in other words, service availability can be enhanced). Note that the key sharing scheme may be called a key sharing protocol, a key exchange protocol, etc., and indicates a technique for generating the same shared key between two parties. As the key sharing scheme, other than the QKD, for example, a post-quantum cryptography-based key distribution (PQKD) using a post-quantum cryptography (PQC) or the like can be cited. As the post-quantum cryptography-based key distribution, for example, a key exchange in which the post-quantum cryptography (for example, lattice encryption and the like) is applied to a key encapsulation mechanism (KEM) or the like can be cited.

Note that, in the communication system 1 according to the present embodiment, it is assumed that a communication path is encrypted by TLS or the like using a PQC between SAE and KME, and mutual authentication or the like using a public key certificate corresponding to the PQC is performed between the SAE and the KME in the TLS using the PQC, and safety having enough strength that withstands attacks using post-quantum computers is secured in the communication between the SAE and the KME.

### <Overall Configuration Example of Communication System 1>

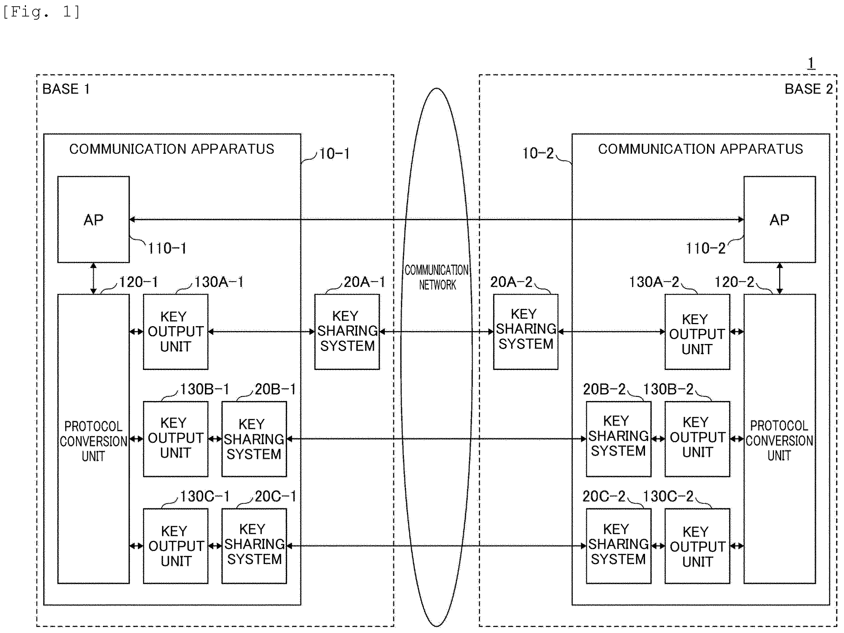

Fig. 1 shows an overall configuration example of the communication system 1 according to the present embodiment. Fig. 1 shows, as one example, the communication system 1 in the case where encrypted communication is performed between a base 1 and a base **2.** In the communication system 1 shown in Fig. 1, the case where a communication apparatus 10-1 is located in the base 1 and a communication apparatus 10-2 is located in the base 2 is shown. In addition, in the communication system 1 shown in Fig. 1, a key sharing system 20A-1, a key sharing system 20B-1, and a key sharing system 20C-1 respectively corresponding to the key sharing schemes available by the communication apparatus 10-1 are also shown. Similarly, a key sharing system 20A-2, a key sharing system 20B-2, and a key sharing system 20C-2 respectively corresponding to the key sharing schemes available by the communication apparatus 10-2 are also shown.

Here, it is assumed that the key sharing system 20A-1 and the key sharing system 20A-2 can mutually generate a shared key by a certain key sharing scheme (for example, QKD) in which KME and SAE are situated on different devices. Meanwhile, it is assumed that the key sharing system 20B-1 and the key sharing system 20B-2 can mutually generate a shared key by a certain key sharing scheme (for example, PQKD) in which KME and SAE are situated on the same device. Similarly, the key sharing system 20C-1 and the key sharing system 20C-2 can also mutually generate a shared key by a certain key sharing scheme in which KME and SAE are situated on the same device. Therefore, in the example shown in Fig. 1, the key sharing system 20A-1 is situated separately from the communication apparatus 10-1, and meanwhile the key sharing system 20B-1 and the key sharing system 20C-1 are included in the communication apparatus 10-1. The same applies to the key sharing system 20A-2 to the key sharing system 20C-2. Note that the communication apparatus 10-1 and the key sharing system 20A-1 are communicably connected by, for example, an intra-base network or the like. Similarly, the communication apparatus 10-2 and the key sharing system 20A-2 are communicably connected by, for example, the intra-base network or the like.

Hereinafter, when the key sharing system 20A-1 to the key sharing system 20C-1 are not distinguished, the key sharing system 20A-1 to the key sharing system 20C-1 are expressed as "key sharing system 20-1". Similarly, when the key sharing system 20A-2 to the key sharing system 20C-2 are not distinguished, the key sharing system 20A-2 to the key sharing system 20C-2 are expressed as "key sharing system 20-2".

The communication apparatus 10-1 performs encrypted communication with the communication apparatus 10-2 by using a key (shared key) shared between the key sharing system 20-1 and the key sharing system 20-2 that use the same key sharing scheme with each other. Here, the communication apparatus 10-1 includes an application program (hereinafter referred to as an AP) 110-1, a protocol conversion unit 120-1, and a key output unit 130-1 corresponding to each key shared system 20-1, respectively. Note that, in the example shown in Fig. 1, the key output unit 130-1 corresponding to the key sharing system 20A-1 is a key output unit 130A-1. Similarly, a key output unit 130-1 corresponding to the key sharing system 20B-1 is a key output unit 130B-1, and a key output unit 130-1 corresponding to the key sharing system 20C-1 is a key output unit 130C-1.

Similarly, the communication apparatus 10-2 performs the encrypted communication with the communication apparatus 10-1 by using the key (shared key) shared between the key sharing system 20-2 and the key sharing system 20-1 that use the same key sharing scheme with each other. Here, the communication apparatus 10-2 includes an AP 110-2, a protocol conversion unit 120-2, and a key output unit 130-2 corresponding to each key sharing system 20-2, respectively. Note that, in the example shown in Fig. 1, key output units 130-2 corresponding to the key sharing system 20A-2 to the key sharing system 20C-2 are a key output unit 130A-2 to a key output unit 130C-2.

Hereinafter, when the communication apparatus 10-1 and the communication apparatus 10-2 are not distinguished, the communication apparatus 10-1 and the communication apparatus 10-2 are expressed as "communication apparatus 10", and when the key sharing system 20-1 and the key sharing system 20-2 are not distinguished, the key sharing system 20-1 and the key sharing system 20-2 are expressed as "key sharing system 20". Similarly, others are expressed as "AP 110", "protocol conversion unit 120", "key output unit 130", and the like.

In addition, when the key sharing system 20A-1 and the key sharing system 20A-2 are not distinguished, the system 20A-1 and the key sharing system 20A-2 are expressed as "key sharing system 20A". Similarly, others are expressed as "key sharing system 20B", "key sharing system 20C", and the like.

The AP 110 is an application program for performing the encrypted communication with the AP 110 of other communication apparatuses 10 by using the shared key.

The protocol conversion unit 120 receives a key request (message representing a key request) from the AP 110, and transmits a key notification (message representing a key notification) to the AP 110. In addition, when an error or the like occurs in the key sharing system 20, the protocol conversion unit 120 switches to other key sharing systems 20. Note that a detailed functional configuration example of the protocol conversion unit 120 will be described later.

The key output unit 130 has a function of concealing a specific mechanism of the key sharing scheme executed by the key sharing system 20 corresponding to the key output unit 130, and returns a shared key generated by the key sharing system 20 corresponding to itself when receiving the key request. That is, when receiving the key request from the protocol conversion unit 120, the key output unit 130 returns a key output including the shared key generated by the key sharing system 20 corresponding to itself to the protocol conversion unit 120. Note that the key output unit 130 may be called a protocol driver or the like.

Thus, the specific mechanism of the key sharing scheme is concealed for the AP 110, and the AP 110 can obtain the shared key by the key notification for the key request only by performing the key request to the protocol conversion unit 120.

In addition, when the error or the like occurs in the key sharing system 20 corresponding to the key output unit 130, the key output unit 130 receives the error notification from the key sharing system 20 and transmits the error notification to the protocol conversion unit 120.

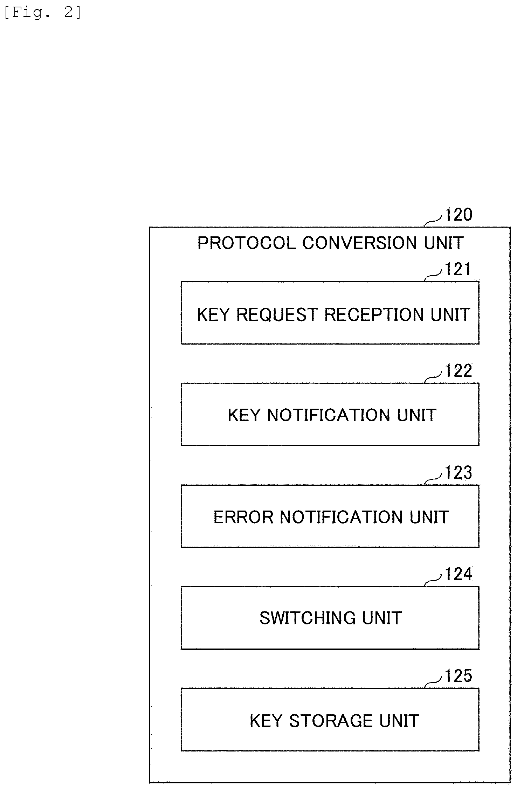

Here, Fig. 2 shows a detailed functional configuration example of the protocol conversion unit 120. As shown in Fig. 2, the protocol conversion unit 120 includes a key request reception unit 121, a key notification unit 122, an error notification unit 123, a switching unit 124, and a key storage unit 125.

The key request reception unit 121 receives the key request from the AP 110, and transmits the key request to the key output unit 130 corresponding to the key sharing scheme (key sharing system 20) being used at present.

Also, when receiving switching notification from the switching unit 124, the key request reception unit 121 sets the key sharing scheme included in the switching notification as the key sharing scheme being used at present. Further, the key request reception unit 121 transmits the switching notification to other communication apparatuses 10.

When receiving the key output from the key output unit 130, the key notification unit 122 extracts the shared key included in the key output and transmits the key notification including the shared key to the AP 110.

When receiving error notification from the key output unit 130, the error notification unit 123 transmits the error notification to the switching unit 124.

When receiving the error notification from the key output unit 130, the switching unit 124 determines the key sharing scheme of a switching destination and transmits the switching notification including information indicating the key sharing scheme after the determination to the key request reception unit 121.

When a key sharing scheme capable of storing a key is being used, the key storage unit 125 stores the shared key generated by the key sharing scheme in a storage device. Hereinafter, the key (shared key) stored in the storage device is also referred to as a storage key. Note that the key storage unit 125 is not an essential component, and the protocol conversion unit 120 may not include the key storage unit 125.

Note that the overall configuration of the communication system 1 shown in Fig. 1 is one example, and the present invention is not limited thereto. For example, in the example shown in Fig. 1, it is assumed that the communication apparatus 10 can use three key sharing schemes, and although the key sharing system 20A to the key sharing system 20C respectively corresponding to the key sharing schemes are illustrated, the number of key sharing systems 20 is equal to the number of key sharing schemes available for the communication apparatus 10, in general. Specifically, for example, when the communication apparatus 10 can use N key sharing schemes, there are N key sharing systems 20 respectively corresponding to the N key sharing schemes.

Further, the communication network between the communication apparatuses 10 and the communication network between the key sharing systems 20 may be the same, or may be different depending on the key sharing scheme executed by the key sharing system 20. For example, when the key sharing scheme executed by the key sharing system 20A is the QKD, the communication network between the communication apparatuses 10 (APs 110 of the communication apparatuses) is the Internet or the like, and the communication network between the key sharing systems 20A is an optical communication network or the like. Meanwhile, for example, when the key sharing scheme executed by the key sharing system 20B is the PQKD or the like, the communication network between the communication apparatuses 10 (APs 110 of the communication apparatuses) and the communication network between the key sharing systems 20B may be the Internet or the like.

### <Key Sharing Processing>

Hereinafter, as one example, key acquisition processing for acquiring the shared key by the AP 110-1 and AP 110-2 will be described with reference to Fig. 3 assuming that the AP 110-1 performs the encrypted communication with the AP 110-2. Note that the AP 110-1 corresponds to an initiator and the AP 110-2 corresponds to a responder.

First, the AP 110-1 transmits the key request to the protocol conversion unit 120-1 (step S101).

When receiving the key request, the key request reception unit 121-1 of the protocol conversion unit 120-1 transmits the key request to the key output unit 130 corresponding to the key sharing scheme set as the key sharing scheme being used at present (step S102). For example, when the QKD is set as the key sharing scheme being used at present, the key request reception unit 121-1 transmits the key request to the key output unit 130A-1 corresponding to the key sharing system 20A-1 for performing the key sharing by the QKD. Meanwhile, for example, when the PQKD is set as the key sharing scheme being used at present, the key request reception unit 121-1 transmits the key request to the key output unit 130B-1 corresponding to the key sharing system 20B-1 for performing the key sharing by the PQKD.

When receiving the key request from the key request reception unit 121-1, the key output unit 130-1 transmits the key request to the key sharing system 20-1 corresponding to itself (step S103). For example, when the key output unit 130A-1 receives the key request, the key output unit 130A-1 transmits the key request to the key sharing system 20A-1. Meanwhile, for example, when the key output unit 130B-1 receives the key request, the key output unit 130B-1 transmits the key request to the key sharing system 20B-1.

When receiving the key request from the key output unit 130-1, the key sharing system 20-1 executes the key sharing scheme with the key sharing system 20-2 executing the same key sharing scheme as itself, and generates the shared key (step S104). For example, when the key sharing system 20A-1 executing the QKD receives the key request, the key sharing system 20A-1 executes the QKD with the key sharing system 20A-2 to generate the shared key. Meanwhile, for example, when the key sharing system 20B-1 executing the PQKD receives the key request, the key sharing system 20B-1 executes the PQKD with the key sharing system 20B-2 to generate the shared key.

The key sharing system 20-1 transmits the key (shared key) generated in the step S104 to the key output unit 130-1 corresponding to itself (step S105).

When receiving the shared key from the key sharing system 20-1, the key output unit 130-1 transmits the key output including the shared key to the protocol conversion unit 120-1 (step S106).

When receiving the key output from the key output unit 130-1, the key notification unit 122-1 of the protocol conversion unit 120-1 extracts the shared key included in the key output and transmits the key notification including the shared key to the AP 110-1 (step S107).

When receiving the key notification from the protocol conversion unit 120-1, the AP 110-1 acquires the shared key from the key notification (step S108).

Meanwhile, the key sharing system 20-2 transmits the key (shared key) generated in the step S104 to the key output unit 130-2 corresponding to itself (step S109).

When receiving the shared key from the key sharing system 20-**2,** the key output unit 130-2 transmits the key output including the shared key to the protocol conversion unit 120-2 (step S110).

When receiving the key output from the key output unit 130-2, the key notification unit 122-2 of the protocol conversion unit 120-2 extracts the shared key included in the key output and transmits the key notification including the shared key to the AP 110-2 (step S111).

When receiving the key notification from the protocol conversion unit 120-2, the AP 110-2 acquires the shared key from the key notification (step S112).

Thus, since the same key (shared key) is shared between the AP 110-1 and the AP 110-2, the encrypted communication can be performed by using the shared key as an encrypted key.

Note that, in the example shown in Fig. 3, the case where the shared key is newly generated has been described, but for example, when the key storage unit 125 stores the shared key, the AP 110 may acquire the storage key as the shared key (particularly, when the shared key cannot be newly generated due to some reason such as occurrence of an error or the like, the storage key may be acquired as the shared key). In this case, the key request reception unit 121 receiving the key request in the step S101 transmits the key request to the key storage unit 125-1. Thus, the shared key stored by the key storage unit 125 is delivered to the key notification unit 122-1 and the shared key is notified to the AP 110-1. In addition, in this case, the key notification unit 122-1 notifies the protocol conversion unit 120-2 of the key ID of the shared key. Thus, the shared key of the key ID is similarly delivered to the key notification unit 122-2 from among the storage keys in the protocol conversion unit 120-2, and the shared key is notified to the AP 110-2.

### <Switching Processing>

Hereinafter, as one example, switching processing will be described with reference to Fig. 4, in the case where switching to another key sharing scheme is performed when some errors occur in the key sharing system 20-1 corresponding to a certain key sharing scheme being used at present.

The key sharing system 20-1 detects the error occurrence (step S201). Here, various errors occurring in the key sharing system 20-1 can be considered, and although the present embodiment can be intended for any errors, for example, the following errors can be intended. Note that the error may be called, for example, a fault, an abnormality, or the like.

(1) An error at key request (for example, a communication error when performing a key sharing with the key sharing system 20-2, an internal error of the key sharing system 20-1 when performing the key sharing, and the like)
(2) Key depletion (including depletion of the key stored by the key storage unit 125)
(3) Computation ability depletion
(4) System error
(5) Tamper abnormality

Note that, for example, an event that the key cannot be shared due to tapping to the optical fiber cable can be detected as a tamper abnormality.

The key sharing system 20-1 transmits the error notification related to the error detected in the step S201 to the key output unit 130-1 corresponding to itself (step S202).

When receiving the error notification from the key sharing system 20-1, the key output unit 130-1 transmits this error notification to the protocol conversion unit 120-1 (step S203).

When receiving the error notification from the key output unit 130-1, the error notification unit 123-1 of the protocol conversion unit 120-1 transmits this error notification to the switching unit 124-1 (step S204).

When receiving the error notification from the error notification unit 123-1, the switching unit 124-1 of the protocol conversion unit 120-1 determines the key sharing scheme of the switching destination (step S205). Here, although the switching unit 124 can determine the key sharing scheme of the switching destination by various methods, it is conceivable to determine the key sharing scheme of the switching destination by the following method, for example.

(a) The key sharing scheme of the switching destination is determined in accordance with the error content or the error cause included in the error notification. This is, for example, a method in which the error content or the error cause is associated with the key sharing scheme of the switching destination in advance, and the key sharing scheme of the switching destination is determined by the associated relation.
(b) One key sharing scheme is determined randomly or in accordance with a predetermined order (predetermined priority order) from among the key sharing schemes other than the key sharing scheme being used at present.
(c) The error content or the error cause included in the error notification is notified to the AP 110 or a user, and the key sharing scheme is determined in accordance with an instruction from the AP 110 or an instruction from the user. In this case, since the AP 110 or the user can confirm the error content or the error cause, an appropriate key sharing scheme can be determined in accordance with the error content or the error cause.

Note that the above-mentioned determination methods are examples, and the key sharing scheme may be determined by various other methods. In addition, other than this, for example, when the key storage unit 125 stores the shared keys, it may be determined to switch the acquisition destination of the shared key to the storage key. Thus, the storage key is used as the shared key until the storage key is depleted, and the key sharing scheme can be switched after the storage key is depleted. In the following description, it is assumed that the key sharing scheme of the switching destination is determined.

The switching unit 124-1 of the protocol conversion unit 120-1 transmits the switching notification including information indicating the key sharing scheme (key sharing scheme of the switching destination) determined in the step S205 to the key request reception unit 121-1 (step S206).

When receiving the switching notification from the switching unit 124-1, the key request reception unit 121-1 of the protocol conversion unit 120-1 sets the key sharing scheme indicated by the information included in the switching notification as the key sharing scheme being used at present (step S207).

In addition, the switching unit 124-1 of the protocol conversion unit 120-1 transmits the switching notification including the information indicating the key sharing scheme (key sharing scheme of the switching destination) determined in the step S205 to the protocol conversion unit 120-2 (step S208).

When receiving the switching notification from the protocol conversion unit 120-2, the switching unit 124-2 of the protocol conversion unit 120-2 transmits the switching notification to the key request reception unit 121-2 (step S209).

When receiving the switching notification from the switching unit 124-2, the key request reception unit 121-2 of the protocol conversion unit 120-2 sets the key sharing scheme indicated by the information included in the switching notification as the key sharing scheme being used at present (step S210).

Thus, when the error or the like occurs in a certain key sharing system 20 and the shared key cannot be generated in the key sharing system 20, the key sharing system 20 can be switched to generate the shared key. In addition, when there are the storage keys, the storage key can be switched to be used as the shared key. Thus, even when the key sharing system 20 cannot be used, the service provided by the AP 110 requiring the encrypted communication can be continued.

### <Modification Example>

Fig. 5 shows a modification example of the overall configuration of the communication system 1 according to the present embodiment. Fig. 1 shows the communication system 1 in which a server 30-1 is further included in the base 1 and a server 30-2 is further included in the base 2. Hereinafter, when the server 30-1 and the server 30-2 are not distinguished, the server 30-1 and the server 30-2 are expressed as "server 30".

The server 30 includes the protocol conversion unit 120 and the key output unit 130. In addition, the server 30 includes the key sharing system 20 corresponding to the key output unit 130 owned by itself or is communicably connected to the key sharing system 20 corresponding to the key output unit 130 owned by itself.

In the example shown in Fig. 5, the server 30-1 includes a protocol conversion unit 120-11, a key output unit 130D-1, and a key output unit 130E-1. In addition, there are a key sharing system 20D-1 corresponding to the key output unit 130D-1 and a key sharing system 20E-1 corresponding to the key output unit 130E-1.

Similarly, the server 30-2 includes a protocol conversion unit 120-21, a key output unit 130D-2, and a key output unit 130E-2. In addition, there are a key sharing system 20D-2 corresponding to the key output unit 130D-2 and a key sharing system 20E-2 corresponding to the key output unit 130E-2.

Since the communication system 1 according to the modification example has a configuration shown in Fig. 5, the server 30 can provide the shared key to the communication apparatus 10. That is, for example, the server 30-1 can provide the shared key generated by the key sharing system 20D-1 or the key sharing system 20E-1 to the AP 110-1 of the communication apparatus 10-1. Similarly, for example, the server 30-2 can provide the shared key generated by the key sharing system 20D-2 or the key sharing system 20E-2 to the AP 110-2 of the communication apparatus 10-2.

At this time, which key sharing system 20 generates the shared key (that is, which key sharing scheme generates the shared key) is shared and linked between all the communication apparatuses 10 and the servers 30. That is, for example, when the error or the like occurs in a certain key sharing system 20 and a key sharing scheme is switched (or, the storage key may be switched to be used as the shared key), the switching unit 124 that determined the switching destination transmits the switching notification to the protocol conversion unit 120 provided in all other communication apparatuses 10 and servers 30. Thus, the key sharing scheme used in the overall communication system 1 is shared and linked.

Note that, in the present modification example, it is possible to consider which of the key sharing system 20 on the communication apparatus 10 side and the key sharing system 20 on the server 30 side should be prioritized when the switching unit 124 determines the key sharing scheme of the switching destination. That is, for example, it is possible to set which of the key sharing system 20 on the communication apparatus 10 side (the key sharing scheme executed by the system) and the key sharing system 20 on the server 30 side (the key sharing scheme executed by the system) should be prioritized as the priority order when the key sharing scheme of the switching destination is determined by the above-mentioned (b). Thus, for example, an operation can be performed, in which when the key sharing system 20 on the server 30 side preferentially generates the shared key but the key sharing system 20 on the server 30 side cannot generate the shared key, the key sharing system 20 on the communication apparatus 10 side generates the shared key.

In addition, in the present modification example, it is possible to consider to which key sharing system 20 (key sharing scheme executed by) of the communication apparatus 10 side or key sharing system 20 of the server 30 side is to be switched in accordance with service quality, the error occurrence content, the error occurrence cause, the error occurrence place, or the like when the switching unit 124 determines the key sharing scheme of the switching destination. Thus, for example, an operation can be performed, in which the error occurs in the key sharing system 20 on the server 30 side, the key sharing system 20 is switched to that on the communication apparatus 10 side, and when the error occurs in the key sharing system 20 on the communication apparatus 10 side, the key sharing system 20 is switched to that on the server 30 side.

### <Hardware Configuration Example>

The communication apparatus 10, the key sharing system 20, and the server 30 included in the communication system 1 according to the present embodiment are implemented by, for example, a hardware configuration of a computer 500 shown in Fig. **6****.** The computer 500 shown in Fig. 6 has an input device 501, a display device 502, an external I/F 503, a communication I/F 504, a processor 505, and a memory device 506. Each piece of the hardware is communicably connected via a bus 507, respectively.

The input device 501 is, for example, a keyboard, a mouse, a touch panel, various physical buttons, or the like. The display device 502 is, for example, a display, a display panel, or the like. Note that the computer 500 may not have at least one of the input device 501 and the display device 502, for example.

The external I/F 503 is an interface with an external device such as a recording medium 503a. As the recording medium 503a, for example, a CD-ROM, a DVD-ROM, an SD memory card, a USB memory card, or the like can be cited.

The communication I/F 504 is an interface for connecting the computer 500 to a communication network. The processor 505 is, for example, any of various arithmetic devices such as a CPU (Central Processing Unit). The memory device 506 is, for example, any of storage devices such as an HDD (Hard Disk Drive), an SSD (Solid State Drive), a RAM (Random Access Memory), a ROM (Read Only Memory), and a flash memory.

However, the hardware configuration of the computer 500 shown in Fig. 6 is one example, and the present invention is not limited thereto. For example, the computer 500 may include a plurality of processors 505 and a plurality of memory devices 506, or may include various types of hardware other than the illustrated hardware.

Note that one or more programs that enable the AP 110, the protocol conversion unit 120, and the key output unit 130 shown in Fig. 1 are stored in the memory device 506, and various functions can be performed by various pieces of processing executed by the processor 505 by one or more programs.

### <Summary>

As described above, if a certain key sharing scheme cannot be used for some reason, the communication system 1 according to the present embodiment can switch to another key sharing scheme. Thus, the availability of the service provided by the application program using the encrypted communication can be improved, and the service quality can be enhanced.

The present invention is not limited to the specifically disclosed embodiments, and various modifications, changes, combinations with known techniques, and the like can be made without departing from the scope of the claims.

### Reference Signs List

1 Communication system
10 Communication apparatus
20 Key sharing system
30 Server
110 AP
120 Protocol conversion unit
121 Key request reception unit
122 Key notification unit
123 Error notification unit
124 Switching unit
125 Key storage unit
130 Key output unit
500 Computer
501 Input device
502 Display device
503 External I/F
503aRecording medium
504 Communication I/F
505 Processor
506 Memory device
507 Bus

## Claims

1. A communication system comprising:
a plurality of communication apparatuses, wherein
each of the communication apparatuses includes:
an application program configured to perform encrypted communication with another communication apparatus; and
a switching unit configured to switch a key sharing scheme for generating a shared key to be used for the encrypted communication, and
the switching unit is configured to switch to another key sharing scheme when the shared key cannot be generated by the key sharing scheme being used at present.

2. The communication system according to claim **1,** wherein the switching unit is configured to switch to the other key sharing scheme when an error occurs in a key sharing system for generating the shared key by the key sharing scheme being used at present.

3. The communication system according to claim **2,** wherein the error includes at least one of a communication error or an internal error when generating the shared key, key depletion of the shared key, computation capability depletion of the key sharing system, a system error of the key sharing system, or a tamper abnormality related to a communication path of the key sharing system.

4. The communication system according to claim 2 or **3,** wherein the switching unit is configured to determine the other key sharing scheme or a key storage function to be a switching destination from among a plurality of key sharing schemes in accordance with at least one of the error content, the error cause, or the error occurrence place, and to switch to the determined other key sharing scheme or the key storage function.

5. The communication system according to claim **4,** wherein the plurality of key sharing schemes include at least quantum key distribution and post-quantum key exchange.

6. A communication apparatus comprising:
an application program configured to perform encrypted communication with another communication apparatus; and
a switching unit configured to switch a key sharing scheme for generating a shared key to be used for the encrypted communication, wherein
the switching unit is configured to switch to another key sharing scheme when the shared key cannot be generated by the key sharing scheme being used at present.

7. A method used by a communication apparatus, the method comprising:
performing, by an application program, encrypted communication with another communication apparatus; and
switching, by a switching unit, a key sharing scheme for generating a shared key to be used for the encrypted communication, wherein
the switching unit performs switching to another key sharing scheme when the shared key cannot be generated by the key sharing scheme being used at present.

8. A program causing a computer to function as the communication apparatus included in the communication system according to claim 1.
